# EUROPEAN PATENT SPECIFICATION

(11) **EP 1 264 536 B1**
(45) Date of publication and mention of the grant of the patent: **18.07.2007**
(21) Application number: 02077086.3
(22) Date of filing: 28.05.2002
(51) Int. Cl.: A01J 5/007, A01J 5/017, A01K 1/12

(54) **A device for performing one or more animal related treatments on an animal**
Vorrichtung zur Durchführung einer oder vieler sich auf einem Tier beziehenden Handlungen
Dispositif pour effectuer un ou plusieurs traitements relatifs à un animal

(30) Priority: 08.06.2001 NL 1018241; 07.12.2001 NL 1019515
(43) Date of publication of application: 11.12.2002
(73) Proprietor: Lely Enterprises AG, 6300 ZUG (CH)
(72) Inventor: Van den Berg, Karel, 2971 BR Bleskensgraaf (NL); Espada Aventin, Elena, 2627 AD Delft (NL)
(74) Representative: Corten, Maurice Jean F.M.

(56) References cited:
- EP-A- 0 764 403
- EP-A- 0 954 962
- EP-A- 0 988 784
- EP-A- 1 131 996
- EP-A- 1 131 997
- WO-A-01/19169
- WO-A-95/35028

## Description

The invention relates to a device according to the preamble of claim 1.

Such a device is known and may comprise e.g. a milking robot for fully automatically milking dairy animals or an automatic feeding installation. The animals visiting the device voluntarily may be recognised there e.g. by means of an animal identification system, after which they are milked or fed, see EP-A-0764403.

The known device has i.a. the disadvantage that the capacity of the device is not utilised optimally. The visiting frequency of the animals to the device is not constant in the course of time. In some periods many animals', in other periods few animals want to visit the device. This may result in long waiting times for the animals at certain points of time. It is both in the interest of the animals and in the interest of the user of the device that the capacity of the device is utilised to a highest possible extent.

The invention aims at improving such a device. According to the invention this is achieved by the measures in the characterizing part of claim 1. The invention is based on the insight that, by influencing the treatment(s) to be performed in dependence of the expected waiting time, it may be achieved that a treatment is performed differently or more quickly in busy times, whereas the animals can be treated more extensively or more slowly in quiet times. This results in a better utilisation of the capacity of the device.

As already partially described in the foregoing, the animal related treatments may comprise e.g. milking and/or feeding, but also inspecting, cleaning, stimulating and/or massaging.

The means for influencing the treatment(s) may comprise e.g. a computer which is suitable for selecting a treatment out of a number of possibilities and/or adjusting and/or changing a treatment as regards its duration (and/or nature and/or intensity). This may take place before the beginning of the treatment, but also during the treatment.

Because the (expected) waiting time cannot always simply be measured directly, there may also be used an indicative parameter which is known or can easily be determined. The parameter may be a measurable or a known, given quantity (which is known on the basis of historical data), such as the (expected) number of animals having to wait at the device or the (expected) visiting frequency of the animals to the device or the (expected) degree of occupation of the device. The momentary, current value of the parameter varying in time can thus be measured or be known on the basis of historical data.

The invention further relates to a device according to the preamble of claim 19.

Such a device is known. The animals visiting the device voluntarily are admitted when the requirement(s) of the admission criterion has/have been met and/or milked when the requirement(s) of the milking criterion has/have been met. A requirement may be e.g. that at least a certain period of time has elapsed since the last milking of the relevant animal, or that the expected milk yield of the animal is above a certain threshold value. The known device has i.a. the disadvantage that the capacity of the device is not utilised optimally. The visiting frequency of the animals to the device is not constant in the course of time. In some periods many animals, in other periods few animals want to visit the device. This may result in long waiting times for the animals at certain points of time. It is both in the interest of the animals and in the interest of the user of the device that the capacity of the device is utilised to a highest possible extent.

The invention aims at improving such a device. According to the invention this is achieved by the measures in the characterizing part of claim 19. The invention is based on the insight that by regulating the admission and/or the milking criterion in dependence of the expected waiting time it may be achieved that animals are sooner refused in busy times, whereas the animals can be milked more frequently in quiet times. This results in a better utilisation of the capacity of the device.

The invention will be explained in further detail with reference to some embodiments.

The device for automatically milking animals is suitable for successively receiving individual animals out of a group of animals which are allowed to walk around freely in an area intended therefor and are able to visit the device individually and voluntarily. The device is provided with means for stimulating the animals to visit the device, such as a concentrate box, sufficiently often. The device is further provided with teat cups and with a milking robot known per se for automatically connecting the teat cups to the teats of an animal to be milked. There may be provided animal identification means for identifying the animals, e.g. when they visit the device.

In an embodiment the device is suitable for stopping the milking of an animal when the milk flow measured in an udder quarter has come below a certain threshold value during at least a certain period of time. As soon as this is the case, the relevant teat cup can be disconnected from the teat. Each teat cup of the device thus has a disconnection limit which may vary per animal and per teat.

According to an aspect of the invention the device is provided with means for varying the threshold value in dependence of the expected waiting time of the animals at the device. When the expected waiting time of the animals at the device is known or has been measured, the threshold value for stopping the milking is adjusted accordingly. When the expected waiting time is short the means adjust the threshold value at a lower level than when the expected waiting time is long. Thus the duration of a milking run becomes shorter in busy times, whereas the animals can be milked for a longer time in quiet times. This results in a better utilisation of the capacity of the device. The means are preferably suitable for adjusting the threshold value for each animal individually and per teat separately.

In a further embodiment the device is provided with means which are suitable for influencing the duration and/or the intensity of the milking by varying the vacuum level in the milk lines and/or the pulsation frequency in the pulsation lines.

In again a further embodiment the means are suitable for influencing the duration of the milking by taking per milking only maximally a certain, adjustable amount of milk, said amount being adjustable in dependence of the (expected) waiting time.

In a still further embodiment the means are suitable for influencing the duration and/or the nature and/or the intensity of the cleaning of the teats.

In a further embodiment the device is suitable for deciding on the basis of a milking criterion with at least one requirement whether or not an animal visiting the milking robot will be milked. The milking criterion may require e.g. that when the animal visits the device the expected milk yield of the animal is above a certain threshold value (e.g. 8 kg). Instead of the milking criterion there may also be used in an analogous manner an admission criterion by means of which it is decided whether an animal is allowed to visit the milking robot.

According to a further aspect of the invention the device is provided with means for varying the requirement or requirements of the milking criterion in dependence of the expected waiting time of the animals at the device. When the expected waiting time of the animals at the device is known, the milking criterion is adjusted accordingly. When the expected waiting time is short the means adjust the requirement or requirements of the milking criterion less strictly than when the expected waiting time is long. For example, the limit of 8 kg may be lowered to 6 kg at night in a quiet period and may be raised to 10 kg in the morning in a busy period. Thus animals are refused sooner in busy times, whereas the animals can be milked more frequently in quiet times. This results in a better utilisation of the capacity of the device. The means are preferably suitable for adjusting the requirement or requirements of the milking criterion for each animal individually.

A (possibly periodically recurring) pattern in time of the expected visiting frequency and/or a (possibly periodically recurring) pattern in time of the (expected) number of animals having to wait at the device for visiting same may be stored in the device, e.g. in the memory of a computer. The pattern may be measured by means of tests or may be known from the professional literature.

The device may also be provided with measuring means for determining a (possibly periodically recurring) pattern in time of the (expected) visiting frequency and/or of a (possibly periodically recurring) pattern in time of the (expected) number of animals having to wait at the device for visiting same. The measuring means may comprise a computer registering the visiting frequency and/or the number of animals and possibly storing the pattern in time. In this manner the device is capable of generating independently the necessary data in relation to the expected waiting time. Optionally it is possible to measure the pattern again, e.g. each time when a period of a month has elapsed. Possibly there may then be found another pattern (e.g. as a result of habituation of the animals). Due to the repeated measurements there are always found current, relevant measurement results.

In a preferred embodiment of the invention the device is provided with counting means for determining the expected number of visits of animals to the device in the near future. This is a cheap and simple manner to determine the expected degree of occupation of the device. The device may be provided with a waiting area for the animals wanting to visit the milking robot, the counting means being provided at the entrance of the waiting area.

The invention also relates to an above-mentioned device for performing at least one animal related treatment, the device not being one of the following devices: a device for automatically milking animals which are allowed to walk around freely in an area intended therefor and are able to visit the device individually, said device being provided with a milking robot and being suitable for stopping the milking of an animal when the milk flow has come below a certain threshold value, the device being provided with means for varying the threshold value in dependence of the expected visiting frequency of the animals to the device; a device for automatically milking animals which are allowed to walk around freely in an area intended therefor and are able to visit the device individually, said device being provided with a milking robot and being suitable for deciding on the basis of a milking criterion with at least one requirement whether or not an animal visiting the milking robot will be milked, the device being provided with means for varying the requirement or requirements of the milking criterion in dependence of the expected visiting frequency of the animals to the device.

## Claims

1. A device for performing one or more animal related treatments on an animal out of a group of animals which are allowed to walk around in an area intended therefore and are able to visit the device voluntarily, **characterized in that** the device is provided with means for influencing at least one animal related treatment in dependence of the value of a parameter which is an indication of the expected waiting time for an animal wanting to visit the device.

2. A device as claimed in claim 1, **characterized in that** the means are suitable for influencing the duration and/or the nature and/or the intensity of the animal related treatment or treatments.

3. A device as claimed in claim 1 or 2, **characterized in that** the parameter is constituted by the visiting frequency and/or the expected visiting frequency of the animals to the device.

4. A device as claimed in claim 1 or 2, **characterized in that** the parameter is constituted by the number of animals being ready to visit the device or showing the intention to visit the device and/or by the number of animals having to wait at the device for visiting same and/or the expected number of animals having to wait at the device for visiting same.

5. A device as claimed in any one of claims 1 to 4, **characterized in that** the means shorten the duration of the animal related treatment or treatments when the waiting time or the expected waiting time is long.

6. A device as claimed in any one of claims 1 to 5, **characterized in that** the means prolong the duration of the animal related treatment or treatments when the waiting time or the expected waiting time is short.

7. A device as claimed in any one of claims 1 to 6, **characterized in that** a possibly periodically recurring pattern in time of the visiting frequency or the expected visiting frequency and/or a possibly periodically recurring pattern in time of the number or the expected number of animals having to wait at the device for visiting same are/is stored in the device.

8. A device as claimed in any one of claims 1 to 7, **characterized in that** the device is provided with measuring means for determining a possibly periodically recurring pattern in time of the visiting frequency or the expected visiting frequency and/or a possibly periodically recurring pattern in time of the number or the expected number of animals having to wait at the device for visiting same.

9. A device as claimed in any one of claims 1 to 8, **characterized in that** the device is provided with counting means for determining the expected number of visits of animals to the device in the near future.

10. A device as claimed in claim 9, **characterized in that** the device is provided with a waiting area for animals wanting to visit the milking robot, the counting means being provided at the entrance of the waiting area.

11. A device as claimed in any one of claims 1 to 10, **characterized in that** the device is provided with a milking robot and is suitable for stopping the milking of an animal when the milk flow has come below a certain threshold value, the means being suitable for influencing the duration of the milking by varying the threshold value.

12. A device as claimed in claim 11, **characterized in that** when the waiting time or the expected waiting time is short the means adjust the threshold value at a lower level than when the waiting time or the expected waiting time is long.

13. A device as claimed in claim 11 or 12, **characterized in that** the means are suitable for adjusting the threshold value for each animal individually.

14. A device as claimed in any one of claims 11 to 13, **characterized in that** the means are suitable for adjusting the threshold value for each animal per teat separately.

15. A device as claimed in any one of claims 1 to 14, provided with a milking robot, **characterized in that** the means are suitable for influencing the duration and/or the intensity of the milking by varying the vacuum level in the milk lines.

16. A device as claimed in any one of claims 1 to 15, provided with a milking robot, **characterized in that** the means are suitable for influencing the duration and/or the intensity of the milking by varying the pulsation frequency in the pulsation lines.

17. A device as claimed in any one of claims 1 to 16, provided with a milking robot, **characterized in that** the means are suitable for influencing the duration of the milking by taking per milking only maximally a certain, adjustable amount of milk, said amount being adjustable in dependence of the waiting time or the expected waiting time.

18. A device as claimed in any one of claims 1 to 17, provided with a milking robot, **characterized in that** the means are suitable for influencing the duration and/or the nature and/or the intensity of the cleaning of the teats.

19. A device for automatically milking animals which are allowed to walk around in an area intended therefor and are able to visit the device voluntarily, said device being provided with a milking robot and being suitable for deciding on the basis of an admission criterion with at least one requirement whether an animal is allowed to visit the milking robot, and/or is suitable for deciding on the basis of a milking criterion with at least one requirement whether or not an animal visiting the milking robot will be milked, **characterized in that** the device is provided with means for varying the requirement or requirements of the admission criterion and/or the milking criterion in dependence of the value of a parameter which is an indication of the expected waiting time for an animal wanting to visit the device.

20. A device as claimed in claim 19, **characterized in that** when the waiting time or the expected waiting time is short the means adjust the requirement or requirements of the admission criterion and/or the milking criterion less strictly than when the waiting time or the expected waiting time is long.

21. A device as claimed in claim 19 or 20, **characterized in that** the means are suitable for adjusting the requirement or requirements of the admission criterion and/or the milking criterion for each animal individually.

## Patentansprüche

1. Einrichtung zum Durchführen einer oder mehrerer tierspezifischer Behandlungen bei einem Tier aus einer Gruppe von Tieren, die in einem hierfür bestimmten Bereich umherlaufen und die Einrichtung aus freien Stücken aufsuchen können,
**dadurch gekennzeichnet, daß** die Einrichtung mit Vorrichtungen versehen ist, um mindestens eine tierspezifische Behandlung in Abhängigkeit von dem Wert eines Parameters zu beeinflussen, der ein Anzeichen für die voraussichtliche Wartezeit eines Tieres ist, das die Einrichtung aufsuchen möchte.

2. Einrichtung nach Anspruch 1,
**dadurch gekennzeichnet, daß** die Vorrichtungen geeignet sind, die Dauer und/oder die Art und/oder die Intensität der tierspezifischen Behandlung oder Behandlungen zu beeinflussen.

3. Einrichtung nach Anspruch 1 oder 2,
**dadurch gekennzeichnet, daß** der Parameter durch die Häufigkeit der Besuche und/oder die voraussichtliche Häufigkeit der Besuche der Tiere in der Einrichtung gebildet ist.

4. Einrichtung nach Anspruch 1 oder 2,
**dadurch gekennzeichnet, daß** der Parameter durch die Anzahl von Tieren gebildet ist, die bereit sind, die Einrichtung aufzusuchen, oder die Absicht erkennen lassen, die Einrichtung aufzusuchen, und/oder durch die Anzahl von Tieren, die an der Einrichtung warten müssen, um sie aufzusuchen, und/oder durch die voraussichtliche Anzahl von Tieren, die an der Einrichtung warten müssen, um sie aufzusuchen.

5. Einrichtung nach einem der Ansprüche 1 bis 4,
**dadurch gekennzeichnet, daß** die Vorrichtungen die Dauer der tierspezifischen Behandlung oder Behandlungen verkürzen, wenn die Wartezeit oder die voraussichtliche Wartezeit lang ist.

6. Einrichtung nach einem der Ansprüche 1 bis 5,
**dadurch gekennzeichnet, daß** die Vorrichtungen die Dauer der tierspezifischen Behandlung oder Behandlungen verlängern, wenn die Wartezeit oder die voraussichtliche Wartezeit kurz ist.

7. Einrichtung nach einem der Ansprüche 1 bis 6,
**dadurch gekennzeichnet, daß** ein eventuell periodisch wiederkehrendes Zeitmuster der Häufigkeit der Besuche oder der voraussichtlichen Häufigkeit der Besuche und/oder ein eventuell periodisch wiederkehrendes Zeitmuster der Anzahl oder der voraussichtlichen Anzahl von Tieren, die an der Einrichtung warten müssen, um sie aufzusuchen, in der Einrichtung gespeichert sind/ist.

8. Einrichtung nach einem der Ansprüche 1 bis 7,
**dadurch gekennzeichnet, daß** die Einrichtung mit Meßvorrichtungen versehen ist, um ein eventuell periodisch wiederkehrendes Zeitmuster der Häufigkeit der Besuche oder der voraussichtlichen Häufigkeit der Besuche und/oder ein eventuell periodisch wiederkehrendes Zeitmuster der Anzahl oder der voraussichtlichen Anzahl von Tieren zu ermitteln, die an der Einrichtung warten müssen, um sie aufzusuchen.

9. Einrichtung nach einem der Ansprüche 1 bis 8,
**dadurch gekennzeichnet, daß** die Einrichtung mit einer Zählvorrichtung versehen ist, um die voraussichtliche Anzahl von Besuchen von Tieren in der Einrichtung in der nahen Zukunft zu ermitteln.

10. Einrichtung nach Anspruch 9,
**dadurch gekennzeichnet, daß** die Einrichtung mit einem Wartebereich für Tiere versehen ist, die den Melkroboter aufsuchen möchten, wobei die Zählvorrichtung am Eingang des Wartebereiches angeordnet ist.

11. Einrichtung nach einem der Ansprüche 1 bis 10,
**dadurch gekennzeichnet, daß** die Einrichtung mit einem Melkroboter versehen und geeignet ist, das Melken eines Tieres zu beenden, wenn der Milchfluß einen bestimmten Grenzwert unterschritten hat, wobei die Vorrichtungen geeignet sind, die Dauer des Melkens durch Variieren des Grenzwertes zu beeinflussen.

12. Einrichtung nach Anspruch 11,
**dadurch gekennzeichnet, daß** die Vorrichtungen bei einer kurzen Wartezeit oder voraussichtlichen Wartezeit den Grenzwert niedriger einstellen als bei einer langen Wartezeit oder voraussichtlichen Wartezeit.

13. Einrichtung nach Anspruch 11 oder 12,
**dadurch gekennzeichnet, daß** die Vorrichtungen geeignet sind, den Grenzwert für jedes Tier individuell einzustellen.

14. Einrichtung nach einem der Ansprüche 11 bis 13,
**dadurch gekennzeichnet, daß** die Vorrichtungen geeignet sind, den Grenzwert für jedes Tier separat pro Zitze einzustellen.

15. Mit einem Melkroboter versehene Einrichtung nach einem der Ansprüche 1 bis 14,
**dadurch gekennzeichnet, daß** die Vorrichtungen geeignet sind, die Dauer und/oder die Intensität des Melkens durch Variieren des Vakuumniveaus in den Milchleitungen zu beeinflussen.

16. Mit einem Melkroboter versehene Einrichtung nach einem der Ansprüche 1 bis 15,
**dadurch gekennzeichnet, daß** die Vorrichtungen geeignet sind, die Dauer und/oder die Intensität des Melkens durch Variieren der Pulsierfrequenz in den Pulsierleitungen zu beeinflussen.

17. Mit einem Melkroboter versehene Einrichtung nach einem der Ansprüche 1 bis 16,
**dadurch gekennzeichnet, daß** die Vorrichtungen geeignet sind, die Dauer des Melkens dadurch zu beeinflussen, daß bei jedem Melken höchstens nur eine bestimmte einstellbare Milchmenge entnommen wird, wobei die Menge in Abhängigkeit von der Wartezeit oder der voraussichtlichen Wartezeit einstellbar ist.

18. Mit einem Melkroboter versehene Einrichtung nach einem der Ansprüche 1 bis 17,
**dadurch gekennzeichnet, daß** die Vorrichtungen geeignet sind, die Dauer und/oder die Art und/oder die Intensität der Reinigung der Zitzen zu beeinflussen.

19. Einrichtung zum automatischen Melken von Tieren, die in einem hierfür bestimmten Bereich umherlaufen und die Einrichtung aus freien Stücken aufsuchen können, wobei die Einrichtung mit einem Melkroboter versehen und geeignet ist, auf der Basis eines Zulassungskriteriums mit mindestens einer Bedingung zu entscheiden, ob ein Tier den Melkroboter aufsuchen darf, und/oder geeignet ist, auf der Basis eines Melkkriteriums mit mindestens einer Bedingung zu entscheiden, ob ein den Melkroboter aufsuchendes Tier gemolken wird oder nicht,
**dadurch gekennzeichnet, daß** die Einrichtung mit Vorrichtungen versehen ist, um die Bedingung oder Bedingungen des Zulassungskriteriums und/oder des Melkkriteriums in Abhängigkeit von dem Wert eines Parameters zu variieren, der ein Anzeichen für die voraussichtliche Wartezeit eines Tieres ist, das die Einrichtung aufsuchen möchte.

20. Einrichtung nach Anspruch 19,
**dadurch gekennzeichnet, daß** die Vorrichtungen bei einer kurzen Wartezeit oder voraussichtlichen Wartezeit die Bedingung oder Bedingungen des Zulassungskriteriums und/oder des Melkkriteriums weniger strikt einstellen als bei einer langen Wartezeit oder voraussichtlichen Wartezeit.

21. Einrichtung nach Anspruch 19 oder 20,
**dadurch gekennzeichnet, daß** die Vorrichtungen geeignet sind, die Bedingung oder Bedingungen des Zulassungskriteriums und/oder des Melkkriteriums für jedes Tier individuell einzustellen.

## Revendications

1. Dispositif pour effectuer un ou plusieurs traitements relatifs à un animal sur un animal parmi un groupe d'animaux qui sont autorisés à se promener dans une zone prévue à cet effet et sont capables de visiter le dispositif de manière volontaire, **caractérisé en ce que** le dispositif est pourvu de moyens permettant d'influencer au moins un traitement relatif à un animal en fonction de la valeur d'un paramètre qui est une indication du temps d'attente escompté pour un animal voulant visiter le dispositif.

2. Dispositif selon la revendication 1 **caractérisé en ce que** les moyens sont adaptés pour influencer la durée et/ou la nature et/ou l'intensité du traitement ou des traitements relatifs à un animal.

3. Dispositif selon la revendication 1 ou 2 **caractérisé en ce que** le paramètre est constitué par la fréquence de visite du dispositif par les animaux et/ou la fréquence de visite du dispositif par les animaux escomptée.

4. Dispositif selon la revendication 1 ou 2 **caractérisé en ce que** le paramètre est constitué par le nombre d'animaux prêts à visiter le dispositif ou montrant l'intention de visiter le dispositif et/ou par le nombre d'animaux devant attendre devant le dispositif pour visiter celui-ci et/ou le nombre d'animaux escompté devant attendre devant le dispositif pour visiter celui-ci.

5. Dispositif selon l'une quelconque des revendications 1 à 4, **caractérisé en ce que** les moyens réduisent la durée du traitement ou des traitements relatifs à un animal lorsque le temps d'attente ou le temps d'attente escompté est long.

6. Dispositif selon l'une quelconque des revendications 1 à 5, **caractérisé en ce que** les moyens prolongent la durée du traitement ou des traitements relatifs à un animal lorsque le temps d'attente ou le temps d'attente escompté est court.

7. Dispositif selon l'une quelconque des revendications 1 à 6, **caractérisé en ce qu'**un modèle récurrent dans le temps éventuellement périodique de la fréquence de visite ou de la fréquence de visite escomptée et/ou un modèle récurrent dans le temps éventuellement périodique du nombre d'animaux ou du nombre escompté d'animaux devant attendre devant le dispositif pour visiter celui-ci est/sont stocké(s) dans le dispositif.

8. Dispositif selon l'une quelconque des revendications 1 à 7, **caractérisé en ce que** le dispositif est pourvu de moyens de mesure pour déterminer un modèle récurrent dans le temps éventuellement périodique de la fréquence de visite ou de la fréquence de visite escomptée et/ou un modèle récurrent dans le temps éventuellement périodique du nombre d'animaux ou du nombre escompté d'animaux devant attendre devant le dispositif pour visiter celui-ci.

9. Dispositif selon l'une quelconque des revendications 1 à 8, **caractérisé en ce que** le dispositif est pourvu d'un compteur pour déterminer le nombre escompté de visites du dispositif par les animaux dans un futur proche.

10. Dispositif selon la revendication 9 **caractérisé en ce que** le dispositif est pourvu d'une zone d'attente pour les animaux voulant visiter le système de traite automatisé, le compteur étant prévu à l'entrée de la zone d'attente.

11. Dispositif selon l'une quelconque des revendications 1 à 10, **caractérisé en ce que** le dispositif est pourvu d'un système de traite automatisé et est adapté pour stopper la traite d'un animal lorsque le flux de lait passe sous une certaine valeur seuil, les moyens étant adaptés pour influencer la durée de la traite en modifiant la valeur seuil.

12. Dispositif selon la revendication 11 **caractérisé en ce que**, lorsque le temps d'attente ou le temps d'attente escompté est court, les moyens règlent la valeur seuil à un niveau inférieur à celui réglé lorsque le temps d'attente ou le temps d'attente escompté est long.

13. Dispositif selon la revendication 11 ou 12 **caractérisé en ce que** les moyens sont adaptés pour régler la valeur seuil pour chaque animal de manière individuelle.

14. Dispositif selon l'une quelconque des revendications 11 à 13, **caractérisé en ce que** les moyens sont adaptés pour régler la valeur seuil pour chaque animal par trayon de manière distincte.

15. Dispositif selon l'une quelconque des revendications 1 à 14, pourvu d'un système de traite automatisé, **caractérisé en ce que** les moyens sont adaptés pour influencer la durée et/ou l'intensité de la traite en modifiant le niveau de vide dans les canalisations à lait.

16. Dispositif selon l'une quelconque des revendications 1 à 15, pourvu d'un système de traite automatisé, **caractérisé en ce que** les moyens sont adaptés pour influencer la durée et/ou l'intensité de la traite en modifiant la fréquence d'impulsion dans les lignes d'impulsion.

17. Dispositif selon l'une quelconque des revendications 1 à 16, pourvu d'un système de traite automatisé, **caractérisé en ce que** les moyens sont adaptés pour influencer la durée de la traite en prenant seulement une certaine quantité ajustable de lait au maximum par traite, ladite quantité étant ajustable en fonction du temps d'attente ou du temps d'attente escompté.

18. Dispositif selon l'une quelconque des revendications 1 à 17, pourvu d'un système de traite automatisé, **caractérisé en ce que** les moyens sont adaptés pour influencer la durée et/ou la nature et/ou l'intensité du nettoyage des trayons.

19. Dispositif pour traire automatiquement des animaux qui sont autorisés à se promener dans une zone prévue à cet effet et sont capables de visiter le dispositif de manière volontaire, ledit dispositif étant pourvu d'un système de traite automatisé et adapté pour décider sur la base d'un critère d'admission avec au moins une condition requise si un animal est autorisé à visiter le système de traite automatisé ou non, et/ou adapté pour décider sur la base d'un critère de traite avec au moins une condition requise si un animal visitant le système automatisé de traite sera trait ou non, **caractérisé en ce que** le dispositif est pourvu de moyens permettant de modifier la condition requise ou les conditions requises du critère d'admission et/ou du critère de traite en fonction de la valeur d'un paramètre qui est une indication du temps d'attente escompté pour un animal voulant visiter le dispositif.

20. Dispositif selon la revendication 19 **caractérisé en ce que**, lorsque le temps d'attente ou le temps d'attente escompté est court, les moyens ajustent la condition requise ou les conditions requises du critère d'admission et/ou du critère de traite de manière moins stricte que lorsque le temps d'attente ou le temps d'attente escompté est long.

21. Dispositif selon la revendication 19 ou 20 **caractérisé en ce que** les moyens sont adaptés pour ajuster la condition requise ou les conditions requises du critère d'admission et/ou du critère de traite pour chaque animal de manière individuelle.
